# EUROPÄISCHE PATENTSCHRIFT

(11) **EP 4 095 038 B1**
(45) Veröffentlichungstag und Bekanntmachung des Hinweises auf die Patenterteilung: **01.01.2025**
(21) Anmeldenummer: 21176532.6
(22) Anmeldetag: 28.05.2021
(51) Int. Cl.: B64D 11/00, B64D 11/06, A47B 31/06, B62B 5/00, A47B 31/00

(54) **TRANSPORTSYSTEM FÜR SPEISENTRÄGER IN EINEM VERKEHRSMITTEL**
TRANSPORT SYSTEM FOR FOOD CARRIERS IN A VEHICLE
SYSTÈME DE TRANSPORT POUR SUPPORTS D'ALIMENT DANS UN MOYEN DE TRANSPORT

(43) Veröffentlichungstag der Anmeldung: 30.11.2022
(73) Patentinhaber: Airbus Operations GmbH, 21129 Hamburg (DE)
(72) Erfinder: BAUER, Michael, 21129 Hamburg (DE); REISS, Matthias, 21129 Hamburg (DE); FREITAG, Michael, 28719 Bremen (DE); MORTENSEN ERNITS, Rafael, 28209 Bremen (DE); BEINKE, Thies Andreas Ernst-Friedrich, 28870 Fischerhude (DE)
(74) Vertreter: LKGLOBAL Lorenz & Kopf Patentanwalt Attorney at Law PartG mbB

(56) Entgegenhaltungen:
- EP-A1- 0 546 968
- EP-A1- 1 681 237
- WO-A1-2015/013494
- FR-A1- 2 948 326
- US-B2- 10 597 158

## Beschreibung

### TECHNISCHES GEBIET

Die Erfindung betrifft ein Transportsystem für Speisenträger in einem Verkehrsmittel sowie ein Verkehrsmittel mit einem derartigen Transportsystem.

### HINTERGRUND DER ERFINDUNG

Auf Reisen in Verkehrsmitteln werden gelegentlich Speisen an Passagiere ausgegeben. Diese werden über Servierwagen auf Tabletts durch die Kabine gefahren und anschließend den Passagieren gereicht. Gerade bei Verkehrsmitteln mit einer hohen Anzahl an Passagiersitzen und insbesondere einer dichten Bestuhlung kann dieser Prozess langwierig und aufwändig sein. Bei Passagiersitzanordnungen mit mehreren nebeneinanderliegenden Passagiersitzen ist stets ein Herüberreichen von Tabletts über dem Gang zugewandte Ablagen notwendig, um an äußeren Passagiersitzen entgegengenommen zu werden. Dieser Vorgang kann mitunter vergleichsweise wenig ergonomisch sein. Mit der Anzahl von Passagiersitzen kann der Personalbedarf für kurze Zeitabschnitte während der Reise erhöht sein.

EP 1 681 237 A1 offenbart einen Servierwagen mit einer Fördereinrichtung zur vertikalen Förderung von Tabletts innerhalb des Servierwagens.

### ZUSAMMENFASSUNG DER ERFINDUNG

Es ist eine Aufgabe der Erfindung, eine Möglichkeit zu schaffen, mit der Speisen effizient ausgegeben werden können und kein besonders erhöhter Personalbedarf besteht.

Die Aufgabe wird gelöst durch ein Transportsystem mit den Merkmalen des unabhängigen Anspruchs 1. Vorteilhafte Ausführungsformen und Weiterbildungen sind den Unteransprüchen der nachfolgenden Beschreibung zu entnehmen.

Es wird ein Transportsystem für Speisenträger in einem Verkehrsmittel vorgeschlagen, aufweisend einen Servierwagen, mehrere Ablagen zur Aufnahme von Speisenträgern, und eine Antriebsvorrichtung zum Bewegen von Speisenträgern, wobei der Servierwagen einen Innenraum mit Aufnahmen zum Haltern von Speisenträgern aufweist, wobei der Servierwagen ferner eine in den Innenraum reichende Öffnung aufweist, aus der Speisenträger herausführbar sind, wobei die Ablagen dazu ausgebildet sind, eine Aufnahmefläche zur Aufnahme der Speisenträger bereitzustellen, und wobei die Antriebsvorrichtung mit mindestens einem des Servierwagens und der Ablagen koppelbar ist und dazu ausgebildet ist, Speisenträger von der Öffnung des Servierwagens auf eine der Ablagen zu bewegen.

Im Sinne der Erfindung ist ein Servierwagen als ein üblicherweise kastenförmiges Behältnis zu verstehen, das auf Rollen innerhalb der Kabine des Verkehrsmittels bewegbar ist und der Lagerung von Speisen, Getränken, Abfällen und anderen Gegenständen dient. Solche Servierwagen sind zumindest für die Verwendung in Verkehrsflugzeugen weitgehend standardisiert, so dass ein problemloser Austausch von Servierwagen zwischen verschiedenen Flugzeugfabrikaten möglich ist und eine Bestückung von Servierwagen auch außerhalb der Kabine erlaubt wird. Ein sogenannter "Half-Size Trolley" weist eine Länge von ungefähr 40 cm auf, während ein sogenannter "Full-Size Trolley" eine Länge von etwa 75 cm besitzt. Die Breite derartiger Servierwagen beträgt üblicherweise ungefähr 30 cm, während die Höhe ungefähr 1 m beträgt. Andere Varianten wären grundsätzlich auch denkbar.

Als Speisenträger könnten Tabletts dienen, die in Aufnahmen des Servierwagens einschiebbar sind. Die Aufnahmen könnten etwa Laschen oder Winkel umfassen, die einander gegenüberliegend an Innenwänden der Servierwagen angeordnet sind und in vertikaler Richtung voneinander beabstandet sind. Tabletts können durch eine vordere, stirnseitige Aufnahmeöffnung horizontal auf die Aufnahmen geschoben werden, um darin gelagert und wieder aus dem Servierwagen gezogen zu werden.

Eine Ablage ist eine passagierbezogene Einrichtung zum Ablegen eines Speisenträgers. Diese kann insbesondere an einem vor dem betreffenden Passagier befindlichen Passagiersitz, an einer Armlehne oder einem anderen Anbauteil in der Kabine angeordnet und von dem betreffenden Passagier aufgeklappt oder auf andere Weise in eine Aufnahmestellung bewegt werden, um einen Speisenträger darauf abzulegen.

Ein Kern der Erfindung liegt darin, dass der Servierwagen eine Öffnung aufweist, die in den Innenraum des Servierwagens reicht. Die Öffnung kann insbesondere eine zusätzliche, seitliche Öffnung sein, die an einer Seitenwandung des Servierwagens angeordnet ist. Ein Servierwagen, der an Passagiersitzen entlang eines Ganges verschoben wird, weist folglich eine zu den Passagiersitzen gerichtete Öffnung auf, aus der einzelne Speisenträger entnehmbar sind. Da sich in Verkehrsmitteln ein Gang üblicherweise zwischen Gruppen von Passagiersitzen befindet, ist vorstellbar, dass der Servierwagen an zwei einander gegenüberliegenden Seitenwänden jeweils eine solche Öffnung aufweist.

Die Antriebsvorrichtung ist dazu vorgesehen, Speisenträger zu bewegen. Die Bewegung sollte dabei von dem Servierwagen aus bis zu einem entferntesten Passagiersitz verlaufen. Befinden sich mehrere Passagiersitze nebeneinander und steht der Servierwagen an einem Ende einer Reihe aus Passagiersitzen, ist die Antriebsvorrichtung bevorzugt dazu vorgesehen, Speisenträger selektiv zu jedem der in der Reihe befindlichen Passagiersitze transportieren zu können. Es ist besonders bevorzugt, dass die Antriebsvorrichtung dazu ausgebildet ist, selektiv eine Bewegungsstrecke des entsprechenden Speisenträgers zu bestimmen. Ein Benutzer oder ein Algorithmus kann die Antriebsvorrichtung etwa so ansteuern, dass der betreffende Speisenträger über zwei Ablagen hinweg transportiert wird, um eine vom Servierwagen aus gesehen dritte Ablage zu erreichen. Es ist vorstellbar, lediglich eine erste Ablage zu durchlaufen, um eine zweite Ablage zu erreichen. Natürlich könnte auch ein Transport von dem Servierwagen auf die Ablage eines nächst gelegenen Passagiersitzes erfolgen.

Die Antriebsvorrichtung kann auf unterschiedliche Arten ausgeführt sein. Sie könnte mindestens einen Antrieb aufweisen, die in dem Servierwagen angeordnet ist. Die Antriebsvorrichtung kann neben einem solchen Antrieb auch Eingriffsmittel oder Bewegungsmittel umfassen, die in Kontakt mit dem entsprechenden Speisenträger bringbar sind und von dem Antrieb angetrieben werden. Ein auf dem Eingriffsmittel oder Bewegungsmittel befindlicher Speisenträger wird bei laufendem Antrieb folglich bewegt. Der Servierwagen könnte eine Batterie umfassen, die den Antrieb und gegebenenfalls eine mit dem Antrieb verbundene Steuereinheit mit elektrischer Leistung versorgt.

Das erfindungsgemäße Transportsystem kann eine automatische oder automatisierte Abgabe von Speisenträgern durchführen. Der Personaleinsatz wird verringert und gleichzeitig wird die Ergonomie verbessert. Es ist vorstellbar, dass ein Benutzer lediglich Eingabemittel an dem Servierwagen betätigt, um die Speisenträger entsprechend auszugeben. Es sind viele verschiedene Varianten möglich, die einem unterschiedlichen Automatisierungsgrad zugrunde liegen. Es ist denkbar, dass ein Benutzer Speisenträger manuell auf die Antriebsvorrichtung stellt, um den Transportvorgang vorzunehmen. Es ist auch denkbar, dass der Servierwagen derart automatisiert ist, dass automatisch nacheinander Speisenträger ausgegeben werden können. Wie weiter nachfolgend erläutert, könnten auch selbstfahrende Servierwagen vorgesehen sein, die selbsttätig eine Anzahl von Speisenträgern in der Kabine des Verkehrsmittels ausgeben können.

Die Ablagen könnten klappbare Ablagetische aufweisen. Die klappbaren Ablagetische könnten beispielsweise an einer Rückenlehne eines Passagiersitzes angeordnet sein und mit einem Knebel oder einer ähnlichen Einrichtung daran verriegelt sein. Ein Ablagetisch könnte Abmessungen aufweisen, die die Abmessungen eines Speisenträgers etwas übersteigen könnte.

Die Ablagen könnten nebeneinander angeordnet sein und einen Abstand zueinander aufweisen, der weniger als einer halben Länge eines Speisenträgers entspricht. Die Ablagetische könnten jeweils an einer Rückenlehne eines Passagiersitzes angeordnet und klappbar sein. Um ein Aufeinanderliegen oder Anstoßen zu vermeiden, sind die Ablagetische derart dimensioniert, dass sie im ausgeklappten Zustand deutlich voneinander beabstandet sind. Der Abstand sollte jedoch nicht übermäßig groß sein, um ein Herunterfallen oder -rutschen von Gegenständen und insbesondere eines nicht vollständig aufliegenden Speisenträgers zu vermeiden. Durch die Begrenzung des Abstandes könnte es möglich sein, Speisenträger von einem Gang aus auf außengelegene Ablagen zu bewegen und hierbei keine besonderen Vorkehrungen an den Ablagen vornehmen zu müssen.

Zumindest eine der Ablagen könnte einen Überbrückungskörper aufweisen, der in einen Zwischenraum zwischen der betreffenden Ablage und einer direkt benachbarten Ablage bringbar ist. Damit kann praktisch eine geschlossene Oberfläche bereitgestellt werden, auf der die Speisenträger von dem Servierwagen zu den einzelnen Ablagen transportiert werden. Der Überbrückungskörper kann insbesondere flächig oder gitterförmig ausgebildet sein.

Der Überbrückungskörper könnte ausrollbar, verschiebbar oder ausklappbar sein. Jeder der Ablagen könnte einen solchen Überbrückungskörper aufweisen, der beispielsweise vollständig flächenintegriert ist, wenn er eingeklappt oder eingerollt ist.

Die Antriebsvorrichtung weist mindestens einen Riemen auf, der auf mindestens einer der Ablagen angeordnet ist, sodass ein Speisenträger durch Haftreibung des mindestens einen Riemens an diesem gehalten und über die mindestens eine Ablage bewegbar ist. Der Riemen könnte gummielastisch sein und einen möglichst flachen Querschnitt aufweisen, um eine möglichst geringe Erstreckung aus einer Flächenebene der Ablagen zu erreichen. Die Ablagen könnten jeweils eine Umlenkungseinrichtung aufweisen, sodass ein Umlaufen der Riemen bereitstellbar ist. Mit einem entsprechenden Haftreibungskoeffizienten kann eine ausreichende Haftreibung zwischen einem Speisenträger und dem Riemen hergestellt werden, sodass sich ein Speisenträger ohne weiteres über die Ablagen transportieren lässt.

Der mindestens eine Riemen ist mit einem Antrieb in dem Servierwagen koppelbar. Damit können die Ablagen einfach aufgebaut sein und es kann ein einzelner, zentraler Antrieb ausreichen, um die gewünschte Bewegung herstellen zu können.

Der Servierwagen könnte selbstfahrend ausgebildet sein. Insbesondere könnte der Servierwagen autonom oder teilautonom sein und sich selbstständig entlang eines Ganges bewegen und nacheinander Speisenträger ausgeben.

Der Servierwagen könnte eine Anhebevorrichtung zum Anheben von Speisenträgern oder zum Anheben von Aufnahmen aufweisen, die dazu ausgebildet ist, übereinander angeordnete Speisenträger nacheinander zur Entnahme an der Öffnung zu platzieren. Die Speisenträger sind bevorzugt übereinander in einzelnen Aufnahmen des Servierwagens angeordnet und können durch die Anhebevorrichtung nach Ausgabe eines oberen Speisenträgers jeweils inkrementell angehoben und ausgegeben werden.

Der Servierwagen könnte eine Ausgabevorrichtung aufweisen, die dazu ausgebildet ist, Speisenträger durch die Öffnung aus dem Servierwagen herauszugeben. Der Servierwagen kann etwa eine Fördereinrichtung umfassen, die den einzelnen Speisenträger aus der Öffnung herausgibt. Diese Fördereinrichtung könnte mit der vorangehend genannten Anhebevorrichtung funktional gekoppelt sein, sodass die Anhebevorrichtung und die Fördereinrichtung in einer Sequenz angesteuert werden.

Die Ablagen könnten jeweils zwei seitliche Träger zur Aufnahme einer roll- oder faltbaren Bahn aufweisen. Die Ablage umfasst folglich linienförmige, starre Träger, welche durch eine roll- oder faltbare Auflage zu einer geschlossenen Ablage ergänzt werden.

Der Servierwagen könnte eine Seitenklappe aufweisen, die dazu ausgebildet ist, die Öffnung zu verschließen und durch eine Klappbewegung diese zu öffnen. Die Seitenklappe dient dem Verschluss der betreffenden Öffnung. Dadurch kann verhindert werden, dass während der vorgesehenen Bewegung des Verkehrsmittels ein Speisenträger durch die Öffnung nach außen gerät.

Die Seitenklappe könnte in einem aufgeklappten Zustand eine Rampenfläche ausbilden, die sich von der Öffnung vertikal zu einer Höhe der Ablagen nach unten erstreckt. Die Öffnung könnte beispielsweise etwas oberhalb der vorgesehenen Nutzhöhe der Ablagen angeordnet sein und die Speisenträger können von der Öffnung über die Seitenklappe auf die Ablagen rutschen.

Die Erfindung betrifft ferner ein Verkehrsmittel, aufweisend eine Kabine mit Passagiersitzen und mindestens einem Transportsystem nach der vorhergehenden Beschreibung.

Das Verkehrsmittel könnte etwa ein Flugzeug sein und die Ablagen könnten zumindest teilweise an den Passagiersitzen angeordnet sein.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren.

In den Figuren stehen weiterhin gleiche Bezugszeichen für gleiche oder ähnliche Objekte.
Fig. 1 zeigt eine schematische Darstellung eines Transportsystems.
Fig. 2a bis 2f zeigen Details eines Ausführungsbeispiels.
Fig. 3a bis 3f zeigen Detail eines Ausführungsbeispiels.
Fig, 4a bis 4e zeigen Detail eines Ausführungsbeispiels.
Fig. 5 zeigt ein Flugzeug.

### DETAILLIERTE DARSTELLUNG EXEMPLARISCHER AUSFÜHRUNGSFORMEN

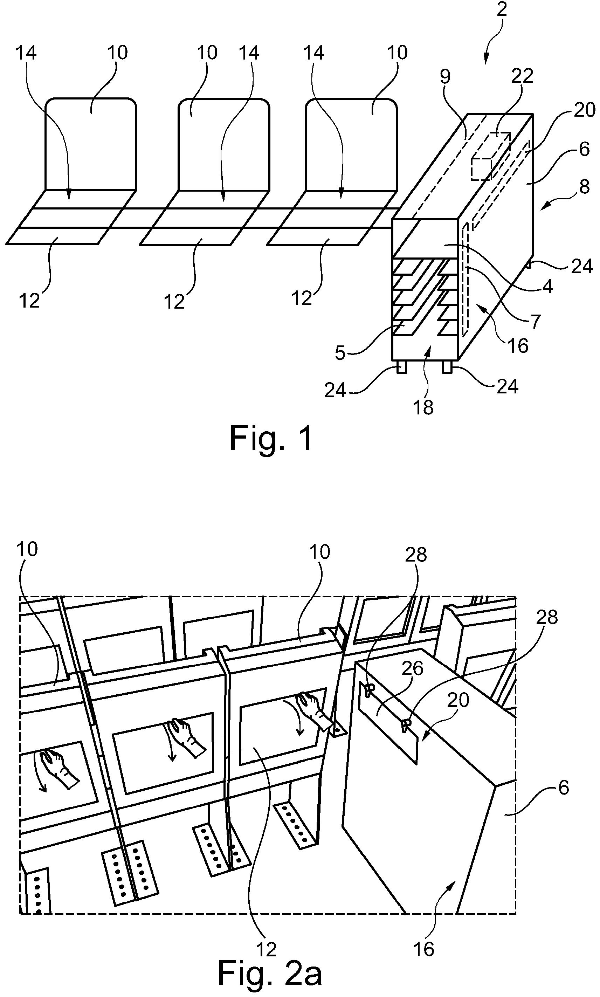

Fig. 1 zeigt ein Transportsystem 2 für Speisenträger 4 in einem Verkehrsmittel. Die gezeigten Elemente befinden sich in einer Kabine des betreffenden Verkehrsmittels. Hier ist ein Servierwagen 6 auf einem Fußboden 8 der Kabine gezeigt. Der Servierwagen 6 weist einen Innenraum 18 auf, in dem mehrere, laschenartige Aufnahmen 5 angeordnet sind, um Speisenträger zu halten. In der Zeichnungsebene links neben dem Servierwagen 6 sind drei Passagiersitze 10 angeordnet, die nebeneinander auf dem Fußboden 8 stehen. Rückwärtig an diesen befinden sich Ablagen 12, welche klappbar in eine im Wesentlichen vertikale Verstauposition und eine im Wesentlichen horizontale Gebrauchsposition bringbar sind. Sie dienen der Aufnahme von Speisenträgern 4 und bilden hierzu jeweils eine Aufnahmefläche.

Das Transportsystem 2 weist eine Antriebsvorrichtung auf, die zum Bewegen der Speisenträger 4 fungiert. Diese umfasst mehrere Komponenten. In diesem Ausführungsbeispiel umfasst diese mehrere Riemen 14, die auf den Ablagen 12 angeordnet sind. Die Riemen 14 sind an den jeweiligen Ablagen 12 umlaufend ausgebildet, sodass sie stets von einer Oberseite der Ablage 12 zu einer Unterseite und wieder zurück umlaufen. Sie sind bevorzugt aus einem gummielastischen Material gebildet und weisen einen entsprechenden Haftreibungskoeffizienten auf. Die Speisenträger 4 können folglich durch Haftreibung der Riemen 14 durch diese bewegt werden.

Der Servierwagen 6 weist exemplarisch an zwei einander gegenüberliegenden Seitenwangen 16 eine verschließbare, in den Innenraum 18 reichende Öffnung 20 auf, durch die die Speisenträger 4 aus dem Innenraum 18 des Servierwagens 6 heraus führbar sind. Eine den Passagiersitzen 10 zugewandte Öffnung 20 kann folglich geöffnet werden, um einen Speisenträger 4 herauszuführen und auf den Riemen 14 auf die gewünschte Ablage 12 zu verfahren. Zum Bewegen der Riemen 14 weist die Antriebsvorrichtung zusätzlich einen lediglich gestrichelt angedeuteten Antrieb 22 auf, der mit den Riemen 14 koppelbar ist. Zum Betreiben des Antriebs 22 kann der Servierwagen 6 eine Batterie und eine Steuereinheit umfassen, welche einen Schalter oder ein anderes Eingabemittel aufweisen kann.

Der Servierwagen 6 weist an seiner Unterseite mehrere Räder 24 auf, mit denen der Servierwagen 6 auf dem Fußboden 8 aufsteht und verfahrbar ist. Es ist denkbar, den Servierwagen 6 automatisiert, automatisch oder autonom auf den Fußboden 8 bewegen zu lassen. Hierfür sind die Räder 24 antreibbar und der Servierwagen 6 könnte Mittel zum Erfassen einer momentanen Position und Ausrichtung umfassen, die das Anfahren von vorgegebenen Positionen zum Ausgeben von Speisenträgern 4 erlauben. Das Öffnen und Schließen der Öffnungen 20 könnte dann ebenso automatisch erfolgen. Zum Heranführen von Speisenträgern 4 an die jeweilige Öffnung 20 könnte eine gestrichelt angedeutete Anhebevorrichtung 7 vorgesehen sein, die die einzelnen Aufnahmen 5 oder die Speisenträger 4 selbst vertikal nach oben zu der Öffnung 20 bewegt. Der Servierwagen 6 kann beispielhaft auch eine Ausgabevorrichtung 9 aufweisen, die dazu ausgebildet ist, Speisenträger 4 durch die Öffnung 20 aus dem Servierwagen 6 herauszugeben.

In den Fig. 2a bis 2f wird das Ausgeben eines Speisenträgers 4 in einer sequenziellen Darstellung gezeigt. Hier ist eine den Passagiersitzen 10 gewandte Seitenwange 16 gezeigt, in der die Öffnung 20 durch eine Seitenklappe 26 verschließbar ist. Die Seitenklappe 26 ist mit zwei Verriegelungselementen 28 verriegelbar. Die Ablagen 12 befinden sich in Fig. 2a in einem hochgeklappten Zustand, d.h. einer Verstauposition, und sind im Begriff, heruntergeklappt zu werden. Die Seitenklappe 26 ist hier noch geschlossen.

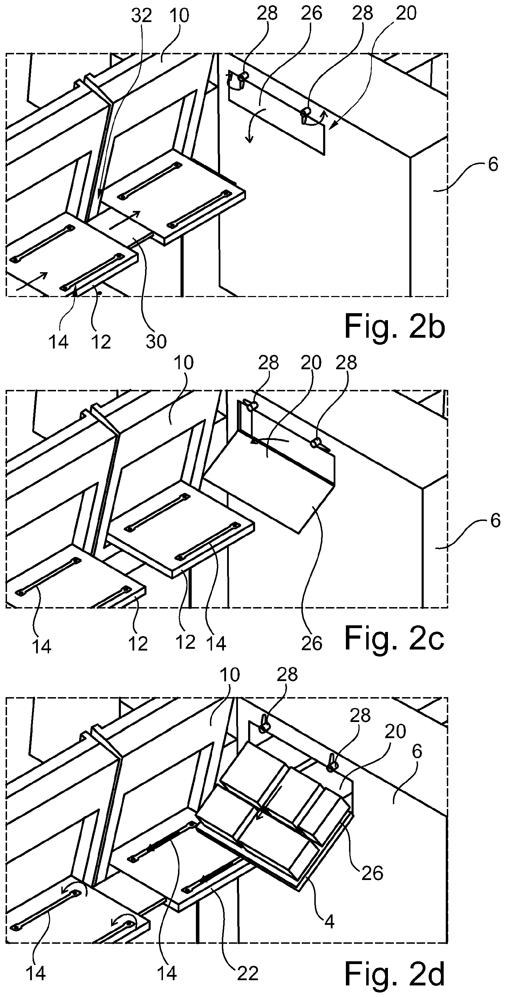

In Fig. 2b sind die Ablagen 12 heruntergeklappt, sodass die daran angeordneten Riemen 14 sichtbar sind. Die Ablagen 12 weisen hier beispielhaft Überbrückungskörper 30 auf, die in einen Zwischenraum 32 zwischen zwei benachbarten Ablagen 12 bringbar sind. Ein Überbrückungskörper 30 könnte beispielsweise ein starres Element sein, das seitlich von einer der Ablagen 12 zu einer direkt benachbarten verschiebbar ist und dann den Zwischenraum 32 im Wesentlichen überbrückt. Alternativ könnten auch rollbare Überbrückungskörper eingesetzt werden, die zwischen den einzelnen Ablagen 12 gespannt werden. Die Verriegelungen 28 der Seitenklappe 26 sind im Begriff, geöffnet zu werden, um die Seitenklappe 26 herunterzuklappen.

In Fig. 2c ist die Seitenklappe 26 heruntergeklappt und bildet in dem aufgeklappten Zustand einer Rampenfläche aus. Diese erstreckt sich von der Öffnung 20 schräg nach unten in Richtung einer Höhe der Ablagen 12. Speisenträger 4, die aus dem Servierwagen 6 herausgeführt werden, können dann über die Seitenklappe 26 in Richtung der nächstgelegenen Ablage 12 rutschen. Dies ist in Figur 2d gezeigt.

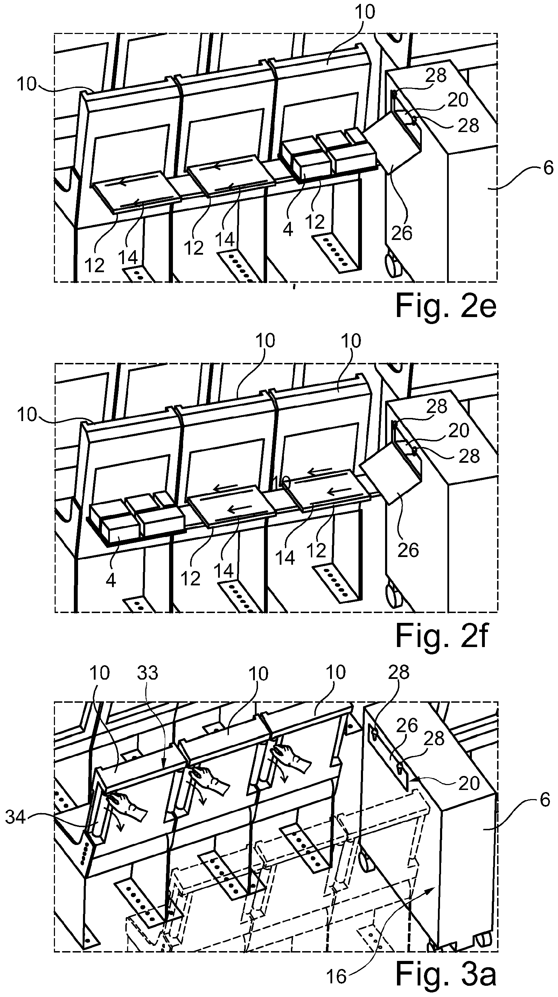

Aufgrund der Ausrichtung des Servierwagens 6 sind die Speisenträger 4, welche hier als Speisentabletts gezeigt sind, quer zu den Ablagen 12 ausgerichtet. Folglich müsste jeder Speisenträger 4 um 90° gedreht werden, um auf den Riemen 14 bewegt zu werden. Dies ist in Figur 2e dargestellt. Das Drehen könnte manuell oder automatisch erfolgen.

In Fig. 2e ist der Speisenträger 6 vollständig auf der ersten Ablage 12 angeordnet und wird durch die Riemen 14 von dem Servierwagen 6 auf die äußerste Ablage 12 bewegt. Dies ist in Figur 2f dargestellt. Anschließend kann ein weiterer Speisenträger 4 auf die direkt benachbarte Ablage 12 bewegt werden, sodass anschließend ein dritter Speisenträger 4 auf die nächstgelegene Ablage 12 folgt.

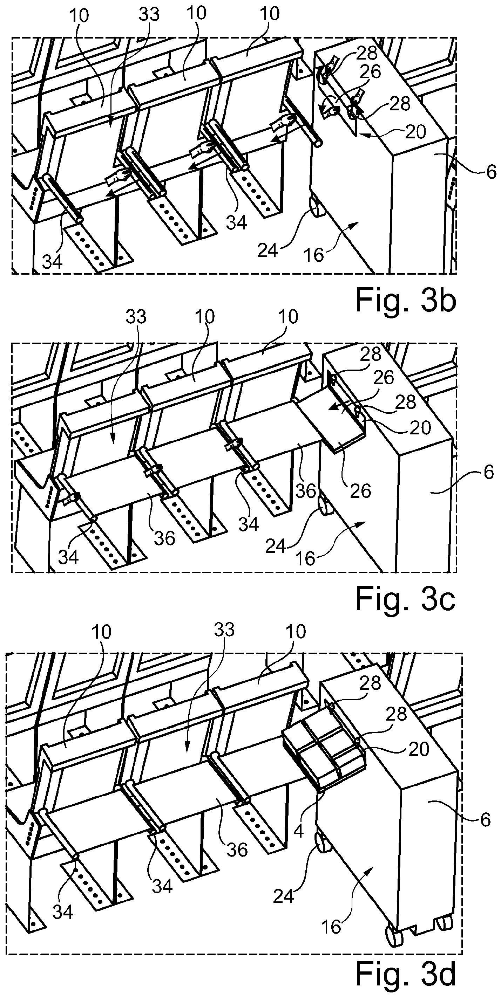

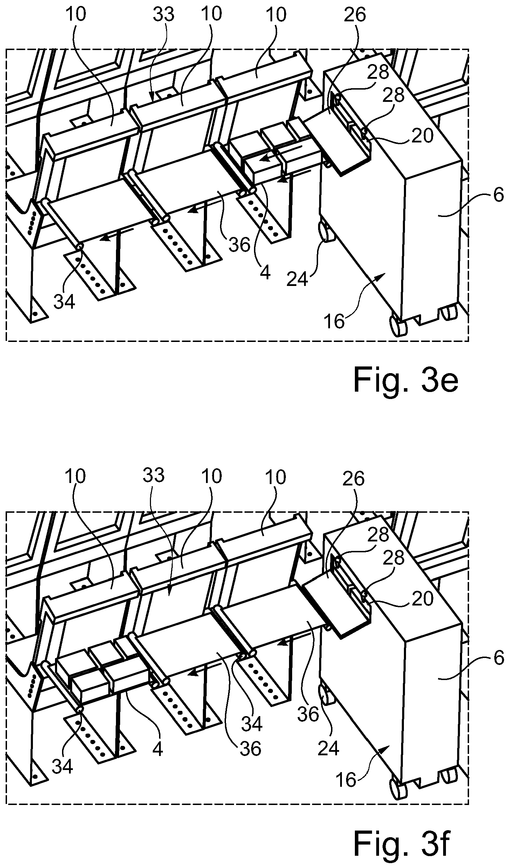

Die Fig. 3a bis 3f zeigen eine leichte Abwandlung hiervon. Ablagen 33 sind hier anders ausgebildet und umfassen jeweils zwei voneinander beanstandete, seitliche Träger 34, die von einem Benutzer von einer im Wesentlichen vertikalen Verstauposition in eine im Wesentlichen horizontale Gebrauchsposition schwenkbar sind.

Zwischen zwei benachbarte, seitliche Träger 34 wird eine elastische, umlaufende Bahn 36 gelegt. Die Bahn 36 kann in einem der Träger 34 aufwickelbar angeordnet und durch einen seitlichen Schlitz herausziehbar sein. Ein hierzu in dem betreffenden Träger 34 angeordneter Wickelmechanismus könnte eine Spiralfeder oder ähnliches aufweisen und die Bahn 36 in Abwesenheit einer auf das freie Ende wirkende Zugkraft in den betreffenden Träger 34 einziehen. Das freie Ende könnte in eine Aufnahme des gegenüberliegenden seitlichen Trägers 34 eingesteckt oder auf andere Art eingebracht werden. Dieser Träger 34 könnte drehbar sein oder im Innern eine drehbare Welle aufweisen. Die Bahn 36 ist mechanisch mit dem betreffenden rotierenden Element gekoppelt, so dass durch Rotation die Bahn aus dem einen seitlichen Träger 34 herausgezogen und von dem anderen Träger 34 aufgewickelt wird. Dadurch bewegt sich ein darauf befindlicher Speisenträger 4 mit dieser Bewegung mit. Es ist vorstellbar, dass die Bahn 36 ebenso aus einem gummielastischen Material gebildet ist, das einen ausreichenden Haftreibungskoeffizienten aufweist, um darauf befindliche Objekte zu bewegen.

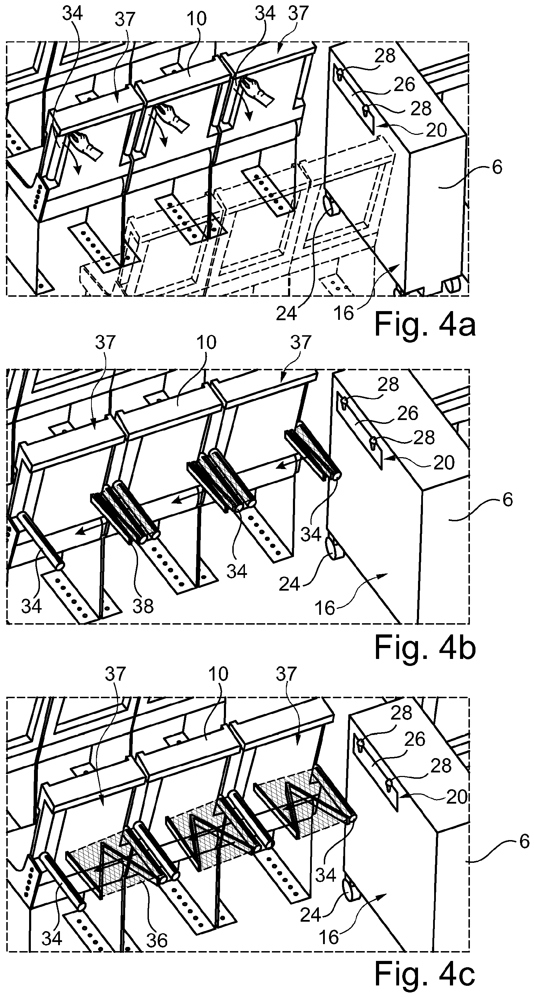

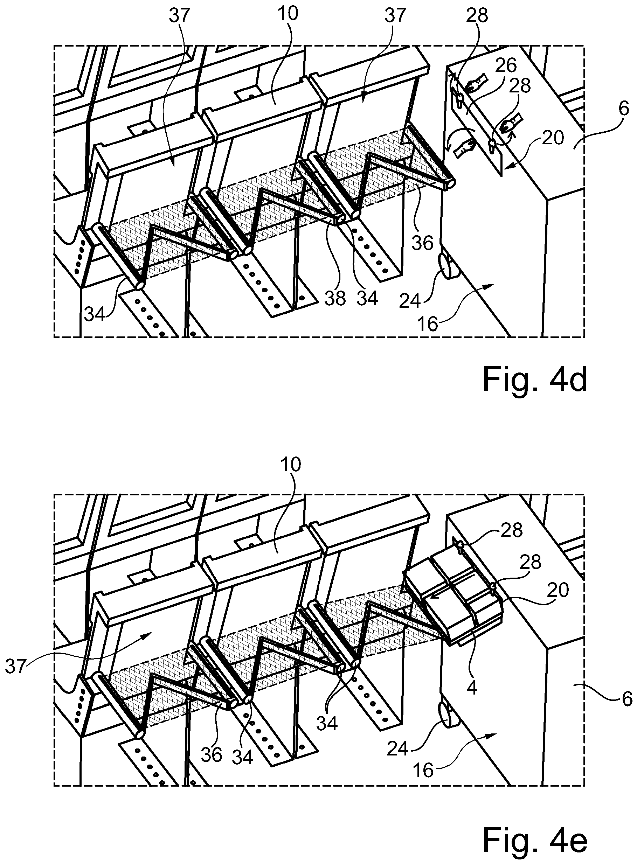

In den Fig.4a bis 4e wird eine weitere exemplarische Ausführungsform dargestellt. Hier sind Auflagen 37 ersichtlich, die ebenso zwei seitliche Träger 34 aufweisen. Zwischen diesen ist ein mehrgliedriger Bügelmechanismus 38 angeordnet, der einklappbar ist. Der Bügelmechanismus 38 dient der Stütze der Bahn 36, die sich zwischen den seitlichen Trägern 34 befindet. Die einzelnen Glieder des Bügelmechanismus können in sich verjüngender oder sich erweiternder Zickzack-Anordnung ausgefahren und eingefahren werden.

In einem eingefahrenen Zustand ist der Bügelmechanismus 38 an oder in einem der seitlichen Träger 34 angeordnet und kann von dort zu dem jeweils gegenüberliegenden Träger 34 ausgefahren werden. Dabei wird die Bahn 36 bevorzugt mitbewegt und an dem gegenüberliegenden Träger 34 angeordnet oder eingehakt. Anschließend kann durch Rotation, wie in den Fig. 3a bis 3f dargestellt, ein Transport eines Speisenträgers 4 erfolgen.

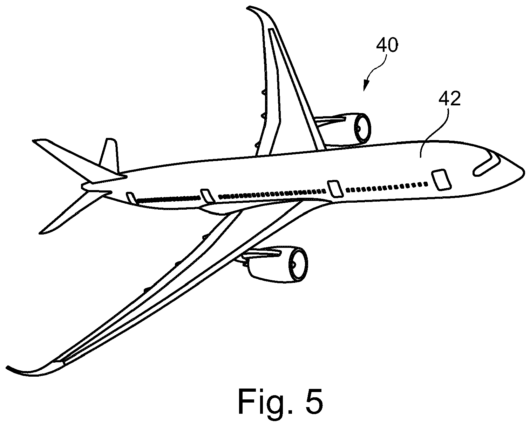

Fig. 5 zeigt schließlich ein Flugzeug 40, das einen Rumpf 42 und eine darin ausgebildete Kabine 44 umfasst, in der Passagiersitze 10 auf dem Fußboden 8 angeordnet sind. Dort ist auch das Transportsystem 2 vorgesehen.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können, sofern diese in den Umfang der beigefügten Ansprüche fallen. Bezugszeichen in den Ansprüchen sind nicht als Einschränkung anzusehen.

### BEZUGSZEICHEN

- 2: Transportsystem
- 4: Speisenträger
- 5: Aufnahme
- 6: Servierwagen
- 7: Anhebevorrichtung
- 8: Fußboden
- 9: Ausgabevorrichtung
- 10: Passagiersitz
- 12: Ablage
- 14: Riemen
- 16: Seitenwange
- 18: Innenraum
- 20: Öffnung
- 22: Antrieb
- 24: Rad
- 26: Seitenklappe
- 28: Verriegelungselement
- 30: Überbrückungskörper
- 32: Zwischenraum
- 33: Ablage
- 34: Träger
- 36: Bahn
- 37: Auflage
- 38: Bügelmechanismus
- 40: Flugzeug
- 42: Rumpf
- 44: Kabine

## Patentansprüche

1. Transportsystem (2) für Speisenträger (4) in einem Verkehrsmittel, aufweisend:
- einen Servierwagen (6),
- mehrere Ablagen (12, 33, 37) zur Aufnahme von Speisenträgern (4), und
- eine Antriebsvorrichtung zum Bewegen von Speisenträgern (4),
wobei der Servierwagen (6) einen Innenraum (18) mit Aufnahmen (5) zum Haltern von Speisenträgern (4) aufweist,
wobei der Servierwagen (6) ferner eine in den Innenraum (18) reichende Öffnung (20) aufweist, aus der Speisenträger (4) herausführbar sind,
wobei die Ablagen (12, 33, 37) dazu ausgebildet sind, eine Aufnahmefläche zur Aufnahme der Speisenträger (4) bereitzustellen,
wobei die Antriebsvorrichtung mit mindestens einem des Servierwagens (6) und der Ablagen (12, 33, 37) koppelbar ist und dazu ausgebildet ist, Speisenträger (4) von der Öffnung des Servierwagens (6) auf eine der Ablagen (12, 33, 37) zu bewegen, und
wobei die Antriebsvorrichtung mindestens einen Riemen (14) aufweist, der auf mindestens einer der Ablagen (12, 33, 37) angeordnet ist, sodass ein Speisenträger (4) durch Haftreibung des mindestens einen Riemens (14) an diesem gehalten und über die mindestens eine Ablage (12, 33, 37) bewegbar ist.

2. Transportsystem (2) nach Anspruch 1,
wobei die Ablagen (12, 33, 37) klappbare Ablagetische aufweisen.

3. Transportsystem (2) nach Anspruch 1 oder 2,
wobei die Ablagen (12, 33, 37) nebeneinander angeordnet sind und einen Abstand zueinander aufweisen, der weniger als einer halben Länge eines Speisenträgers (4) entspricht.

4. Transportsystem (2) nach Anspruch 3,
wobei zumindest eine der Ablagen (12, 33, 37) einen Überbrückungskörper (30) aufweist, der in einen Zwischenraum (32) zwischen der betreffenden Ablage (12, 33, 37) und einer direkt benachbarten Ablage (12, 33, 37) bringbar ist.

5. Transportsystem (2) nach Anspruch 4,
wobei der Überbrückungskörper (30) ausrollbar, verschiebbar oder ausklappbar ist.

6. Transportsystem (2) nach einem der vorhergehenden Ansprüche,
wobei der mindestens eine Riemen (14) mit einem Antrieb (22) in dem Servierwagen (6) koppelbar ist.

7. Transportsystem (2) nach einem der vorhergehenden Ansprüche,
wobei der Servierwagen (6) selbstfahrend ausgebildet ist.

8. Transportsystem (2) nach einem der vorhergehenden Ansprüche,
wobei der Servierwagen (6) eine Anhebevorrichtung (7) zum Anheben von Speisenträgern (4) oder zum Anheben von Aufnahmen (5) aufweist, die dazu ausgebildet ist, übereinander angeordnete Speisenträger (4) nacheinander zur Entnahme an der Öffnung (20) zu platzieren.

9. Transportsystem (2) nach einem der vorhergehenden Ansprüche,
wobei der Servierwagen (6) eine Ausgabevorrichtung (9) aufweist, die dazu ausgebildet ist, Speisenträger (4) durch die Öffnung aus dem Servierwagen (6) herauszugeben.

10. Transportsystem (2) nach einem der vorhergehenden Ansprüche,
wobei die Ablagen (12, 33, 37) jeweils zwei seitliche Träger (34) zur Aufnahme einer roll- oder faltbaren Bahn (36) aufweisen.

11. Transportsystem (2) nach einem der vorhergehenden Ansprüche,
wobei der Servierwagen (6) eine Seitenklappe (26) aufweist, die dazu ausgebildet ist, die Öffnung (20) zu verschließen und durch eine Klappbewegung diese zu öffnen.

12. Transportsystem (2) nach Anspruch 11,
wobei die Seitenklappe (26) in einem aufgeklappten Zustand eine Rampenfläche ausbildet, die sich von der Öffnung (20) vertikal zu einer Höhe der Ablagen (12, 33, 37) nach unten erstreckt.

13. Verkehrsmittel (40), aufweisend eine Kabine (44) mit Passagiersitzen (10) und mindestens einem Transportsystem (2) nach einem der vorhergehenden Ansprüche.

14. Verkehrsmittel (40) nach Anspruch 13,
wobei das Verkehrsmittel (40) ein Flugzeug (40) ist und die Ablagen (12, 33, 37) zumindest teilweise an den Passagiersitzen (10) angeordnet sind.

## Claims

1. Transport system (2) for food carriers (4) in a means of transport, having:
- a serving trolley (6),
- multiple supports (12, 33, 37) for receiving food carriers (4), and
- a drive apparatus for moving food carriers (4),
wherein the serving trolley (6) has an interior space (18) with receptacles (5) for holding food carriers (4), wherein the serving trolley (6) furthermore has an opening (20) which extends into the interior space (18) and out of which food carriers (4) are able to be guided, wherein the supports (12, 33, 37) are configured to provide a receiving surface for receiving the food carriers (4),
wherein the drive apparatus is able to be coupled to at least one of the serving trolley (6) and the supports (12, 33, 37) and is configured to move food carriers (4) from the opening of the serving trolley (6) onto one of the supports (12, 33, 37), and
wherein the drive apparatus has at least one belt (14) which is arranged on at least one of the supports (12, 33, 37) such that a food carrier (4) is held by static friction of the at least one belt (14) on the latter and is movable over the at least one support (12, 33, 37).

2. Transport system (2) according to Claim 1,
wherein the supports (12, 33, 37) comprise swing-action set-down tables.

3. Transport system (2) according to Claim 1 or 2,
wherein the supports (12, 33, 37) are arranged one next to the other and are at a distance from one another that corresponds to less than half a length of a food carrier (4) .

4. Transport system (2) according to Claim 3,
wherein at least one of the supports (12, 33, 37) has a bridging body (30) which is able to be brought into an interspace (32) between the respective support (12, 33, 37) and a directly adjacent support (12, 33, 37).

5. Transport system (2) according to Claim 4,
wherein the bridging body (30) is able to be rolled out, displaced or swung out.

6. Transport system (2) according to one of the preceding claims,
wherein the at least one belt (14) is able to be coupled to a drive (22) in the serving trolley (6).

7. Transport system (2) according to one of the preceding claims,
wherein the serving trolley (6) is designed to be self-propelling.

8. Transport system (2) according to one of the preceding claims,
wherein the serving trolley (6) has a lifting apparatus (7) for lifting food carriers (4) or for lifting receptacles (5) that is configured to successively place food carriers (4), which are arranged one above the other, at the opening (20) for removal purposes.

9. Transport system (2) according to one of the preceding claims,
wherein the serving trolley (6) has a dispensing apparatus (9) which is configured to dispense food carriers (4) from the serving trolley (6) through the opening.

10. Transport system (2) according to one of the preceding claims,
wherein the supports (12, 33, 37) each have two lateral carriers (34) for receiving a rollable or foldable web (36) .

11. Transport system (2) according to one of the preceding claims,
wherein the serving trolley (6) has a side flap (26) which is configured to close off the opening (20) and to open the latter by way of a swing-action movement.

12. Transport system (2) according to Claim 11,
wherein, in a swung-open state, the side flap (26) forms a ramp surface which extends from the opening (20) vertically downwards to a height of the supports (12, 33, 37) .

13. Means of transport (40) having a cabin (44) with passenger seats (10) and with at least one transport system (2) according to one of the preceding claims.

14. Means of transport (40) according to Claim 13,
wherein the means of transport (40) is an aircraft (40) and the supports (12, 33, 37) are arranged at least partially on the passenger seats (10).

## Revendications

1. Système de transport (2) pour supports d'aliments (4) dans un moyen de transport, présentant :
- un chariot de service (6),
- plusieurs plateaux (12, 33, 37) destinés à recevoir des supports d'aliments (4), et
- un dispositif d'entraînement pour déplacer les supports d'aliments (4),
le chariot de service (6) présentant un espace intérieur (18) avec des réceptacles (5) pour maintenir des supports d'aliments (4),
le chariot de service (6) présentant en outre une ouverture (20) s'étendant dans l'espace intérieur (18), à partir de laquelle des supports d'aliments (4) peuvent être sortis,
les plateaux (12, 33, 37) étant configurés pour fournir une surface de réception pour recevoir les supports d'aliments (4),
le dispositif d'entraînement pouvant être couplé à au moins l'un du chariot de service (6) et des plateaux (12, 33, 37) et étant configuré pour déplacer des supports d'aliments (4) de l'ouverture du chariot de service (6) à l'un des plateaux (12, 33, 37), et
le dispositif d'entraînement présentant au moins une courroie (14) agencée sur au moins l'un des plateaux (12, 33, 37), de telle sorte qu'un support d'aliments (4) est maintenu sur celui-ci par friction adhésive de l'au moins une courroie (14) et peut être déplacé sur l'au moins un plateau (12, 33, 37).

2. Système de transport (2) selon la revendication 1,
les plateaux (12, 33, 37) présentant des tables de dépôt rabattables.

3. Système de transport (2) selon la revendication 1 ou 2,
les plateaux (12, 33, 37) étant agencés côte à côte et présentant une distance entre eux qui correspond à moins d'une demi-longueur d'un support d'aliment (4).

4. Système de transport (2) selon la revendication 3,
au moins l'un des plateaux (12, 33, 37) présentant un corps de pontage (30) qui peut être amené dans un espace intermédiaire (32) entre le plateau concerné (12, 33, 37) et un plateau (12, 33, 37) directement adjacent.

5. Système de transport (2) selon la revendication 4,
le corps de pontage (30) pouvant être déroulé, coulissé ou déployé.

6. Système de transport (2) selon l'une quelconque des revendications précédentes,
l'au moins une courroie (14) pouvant être couplée à un entraînement (22) dans le chariot de service (6).

7. Système de transport (2) selon l'une quelconque des revendications précédentes,
le chariot de service (6) étant configuré pour être autopropulsé.

8. Système de transport (2) selon l'une quelconque des revendications précédentes,
le chariot de service (6) présentant un dispositif de soulèvement (7) pour soulever des supports d'aliments (4) ou pour soulever des réceptacles (5), qui est configuré pour placer successivement des supports d'aliments (4) agencés les uns au-dessus des autres pour les prélever au niveau de l'ouverture (20).

9. Système de transport (2) selon l'une quelconque des revendications précédentes,
le chariot de service (6) présentant un dispositif de distribution (9) qui est configuré pour distribuer des supports d'aliments (4) à partir du chariot de service (6) à travers l'ouverture.

10. Système de transport (2) selon l'une quelconque des revendications précédentes,
les plateaux (12, 33, 37) présentant chacun deux supports latéraux (34) destinés à recevoir une bande enroulable ou pliable (36).

11. Système de transport (2) selon l'une quelconque des revendications précédentes,
le chariot de service (6) présentant un volet latéral (26) qui est configuré pour fermer l'ouverture (20) et pour l'ouvrir par un mouvement de rabattement.

12. Système de transport (2) selon la revendication 11,
le volet latéral (26), dans un état déplié, formant une surface de rampe qui s'étend verticalement vers le bas depuis l'ouverture (20) jusqu'à une hauteur des plateaux (12, 33, 37).

13. Moyen de transport (40), présentant une cabine (44) avec des sièges de passagers (10) et au moins un système de transport (2) selon l'une quelconque des revendications précédentes.

14. Moyen de transport (40) selon la revendication 13,
le moyen de transport (40) étant un avion (40) et les plateaux (12, 33, 37) étant agencés au moins partiellement sur les sièges de passagers (10).
